# EUROPÄISCHE PATENTSCHRIFT

(11) **EP 1 206 342 B1**
(45) Veröffentlichungstag und Bekanntmachung des Hinweises auf die Patenterteilung: **17.09.2003**
(21) Anmeldenummer: 00954366.1
(22) Anmeldetag: 25.07.2000
(51) Int. Cl.: B29C 49/42

(54) **VORRICHTUNG UND VERFAHREN ZUR BLASFORMUNG VON BEHÄLTERN**
DEVICE AND METHOD FOR BLOW FORMING CONTAINERS
DISPOSITIF ET PROCEDE DE SOUFFLAGE DE CONTENANTS

(30) Priorität: 27.07.1999 DE 19935267
(43) Veröffentlichungstag der Anmeldung: 22.05.2002
(73) Patentinhaber: SIG Corpoplast GmbH & Co. KG, 22145 Hamburg (DE)
(72) Erfinder: CHOINSKI, Julian, D-22089 Hamburg (DE)
(74) Vertreter: Klickow, Hans-Henning
(86) Internationale Anmeldenummer: DE0002452
(87) Internationale Veröffentlichungsnummer: WO01007236

(56) Entgegenhaltungen:
- DE-A- 19 810 238
- US-A- 4 391 578
- US-A- 5 863 571

## Beschreibung

Die Erfindung betrifft eine Vorrichtung zur Blasformung von Behältern aus einem thermoplastischen Material, die eine Heizeinrichtung zur Temperierung von Vorformlingen und mindestens eine mit relativ zueinander positionierbaren Formträgern versehene Blasstation aufweist und bei der im Bereich der Blasstation mindestens zwei Kavitäten sowie ein als Teil der Blasstation ausgebildetes Positionierelement zur gleichzeitigen Handhabung der Vorformlinge angeordnet sind und bei der das Positionierelement mindestens zwei Halteelemente für jeweils einen Vorformling oder einen Behälter aufweist.

Die Erfindung betrifft darüber hinaus ein Verfahren zur Blasformung von Behältern aus einem thermoplastischen Material, bei dem Vorformlinge temperiert und im Bereich mindestens einer Blasstation zu Behältern umgeformt werden und bei dem Formen zur Vorgabe der Behälterkontur von Formträgern gehaltert werden, die von Tragarmen positionierbar sind, sowie bei dem innerhalb jeder Blasstation mindestens zwei Vorformlinge gleichzeitig zu Behältern umgeformt und derart positioniert werden, daß die Vorformlinge bei einer Eingabe in die Blasstation eine Positionierung einnehmen, die von der Positionierung während des Blasvorganges abweicht.

Eine solche Vorrichtung bzw. ein solches Verfahren ist aus DE-A-19 810 238 bekannt.

Derartige Vorrichtungen werden dazu verwendet, Vorformlinge aus einem thermoplastischen Material, beispielsweise Vorformlinge aus PET (Polyethylenterephthalat), innerhalb einer Blasmaschine zu Behältern umzuformen. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die Vorrichtung ist ebenfalls dazu ausgestattet, fertig geblasene Behälter aus der Blaseinrichtung zu entnehmen und weiterzubefördern.

Der grundsätzliche Aufbau einer Blasstation zur Behälterformung wird in der DE-OS 42 12 583 beschrieben.

Möglichkeiten zur Temperierung der Vorformlinge werden in DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden.

Die Vorformlinge können aber auch mit anderen Trageinrichtungen gehandhabt werden. Die Verwendung von Greifzangen zur Handhabung von Vorformlingen wird beispielsweise in der FR-OS 27 20 679 beschrieben. Ein Spreizdorn, der zur Halterung in einen Mündungsbereich des Vorformlings einführbar ist, wird in der WO 95 33 616 erläutert.

Die bereits erläuterte Handhabung der vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Bei ortsfesten Blasstationen. die insbesondere dafür geeignet sind, mehrere Kavitäten zur Behälterformung aufzunehmen, werden typischerweise parallel zueinander angeordnete Platten als Formträger verwendet.

Überwiegend wird im Bereich einer Blasstation zu einem bestimmten Zeitpunkt jeweils ein Behälter geblasen. Insbesondere bei der Fertigung von kleinen Behältern kann es jedoch vorteilhaft sein, gleichzeitig zwei oder mehr Vorformlinge in einer Blasstation zu einem Behälter aufzublasen. Eine derartige Verfahrensweise wird beispielsweise in der WO-PCT 95/05933 sowie der WO-PCT 96/26826 beschrieben. Auch im Bereich der sogenannten Einstufenverfahren sowie beim Extrusionsblasen ist die gleichzeitige Expansion mehrerer Vorformlinge im Zusammenhang mit rotierenden Blasrädern bereits bekannt. Bei Blasmaschinen mit stationär angeordneten Blasformen wird die überwiegende Zahl der Maschinen mit Blasstationen ausgerüstet, die Mehrfachkavitäten aufweisen.

Unterschiedliche Möglichkeiten zur Eingabe einer Mehrzahl von Vorformlingen in eine Blasstation mit mehreren Kavitäten sowie zur Entnahme einer Mehrzahl von geblasenen Behältern aus derartigen Blasstationen werden in der DE-OS 198 10 238 erläutert. Aus dieser Druckschrift ist es insbesondere bereits bekannt, neben der Blasstation ein rotierendes Übergaberad mit beweglichen Tragarmen anzuordnen. Die Tragarme sind zueinander positionierbar und tragen jeweils ein Haltelement für Vorformlinge. Durch eine Positionsveränderung der Tragarme relativ zueinander erfolgt auch eine Abstandsveränderung der Vorformlinge relativ zueinander.

In der US-PS 43 91 578 wird eine weitere Einrichtung zur Abstandsveränderung von Vorformlinge beschrieben. Im Bereich einer Übergabeeinrichtung für die Vorformlinge sind Halteelemente für die Vorformlinge entlang einer Führungschiene relativ zueinander positionsveränderlich angeordnet. Eine jeweilige Positionierung wird unter Verwendung von Kurvensteuerungen vorgegeben. Nach Erreichen eines vorgesehenen Abstandes zwischen den Vorformlingen wird die Positioniereinrichtung in den Bereich der Blasstation überführt und die Vorformlinge werden hier zu Flaschen aufgeblasen.

Aus der US-PS 58 63 571 ist eine Vorrichtung bekannt, die in der bereits erwähnten PCT-WO 96 / 26 826 ebenfalls beschrieben ist. Auch hier sind im Bereich der Blasstationen relativ zueinander nicht abstandsveränderliche Halteelemente angeordnet und eine Abstandsveränderung der Vorformlinge wird von einer separaten und neben den Blasstationen angeordneten Übergabeeinrichtungen durchgeführt.

Die bislang bekannten Konstruktionen zu Blasstationen mit mehreren Kavitäten können noch nicht alle Anforderungen erfüllen, die an eine Produktion der Behälter mit hoher Ausstoßleistung bei gleichzeitiger schonender Materialhandhabung und hoher maschinenbaulicher Zuverlässigkeit gestellt werden.

Aufgabe der vorliegenden Erfindung ist es, eine Vorrichtung der einleitend genannten Art derart zu konstruieren, daß eine schonende Materialhandhabung bei hoher Produktionsleistung unterstützt wird.

Diese Aufgabe wird erfindungsgemäß dadurch gelöst, daß die Halteelemente abstandsveränderlich im Bereich des Positionierelementes angeordnet sind und daß eine jeweilige Positionierung der Halteelemente relativ zueinander in Abhängigkeit von einer jeweiligen Anordnung des Positionierelementes relativ zu den Kavitäten vorgegeben ist.

Weitere Aufgabe der vorliegenden Erfindung ist es, ein Verfahren der einleitend genannten Art derart anzugeben, daß eine gleichzeitige Übergabe von mindestens zwei Vorformlingen an die Blasstation unterstützt wird.

Diese Aufgabe wird erfindungsgemäß dadurch gelöst, dass ein Abstand der Vorformlinge relativ zueinander während des Transportes von der Eingabe in die Blasstation bis zur Blaspositionierung von einem als Teil der Blasstation ausgebildeten Element verändert wird und bei dem die Abstandsveränderung von diesem Element zwangssynchronisiert in Abhängigkeit von einer jeweiligen Positionierung entlang des Transportweges von der Eingabe in die Blasstation bis zur Blaspositionierung durchgeführt wird und dass die Vorformlinge nach einem Einnehmen der Blaspositionierung und einem Schließen der Blasstation gleichzeitig gereckt werden.

Durch die abstandsveränderliche Anordnung der Halteelemente im Bereich des Positionierelementes ist es möglich, die Vorformlinge nebeneinander in den Bereich der Blasstation einzuführen und erst im Bereich der Blasstation die endgültige Positionierung sowie die Vorgabe des für die Blasverformung vorgesehenen Abstandes der Vorformlinge vorzugeben. In umgekehrter Weise kann nach einem Abschluß der Blasverformung und einem Trennen der geblasenen Behälter von den Kavitäten eine Abstandsvorgabe der geblasenen Behälter derart vorgenommen werden, daß die für eine Ausgabe erforderlichen optimalen Abstandsverhältnisse vorliegen. Durch die Zwangssynchronisierung zwischen der Abstandsveränderung der Vorformlinge und der Durchführung der Positionierbewegung werden exakt reproduzierbare Verhältnisse realisiert. Insbesondere ist es möglich, sowohl bei der Eingabe der Vorformlinge in die Blasstation als auch bei der Ausgabe der geblasenen Behälter aus der Blasstation gleiche Abstände der jeweiligen Längsachsen vorzusehen.

Eine hohe Reproduzierbarkeit bei der Durchführung der Positionierbewegungen kann dadurch erreicht werden, daß die Positionierung der Halteelemente mechanisch gesteuert ist.

Ein einfacher mechanischer Aufbau wird dadurch unterstützt, daß die Bewegung der Halteelemente von Schwenkhebeln gesteuert ist. Insbesondere ist daran gedacht, die Winkel der Schwenkhebel relativ zueinander derart vorzugeben, daß bei einer Ausgabe von geblasenen Behältern mit einer Querschnittkontur, die von einer Kreisform abweicht, eine definierte Änderung der räumlichen Orientierung während der Durchführung des Positioniervorganges erfolgt.

Zur Bereitstellung der erforderlichen Kinematik wird vorgeschlagen, daß zur Positionierung der Halteelemente drei Hebel verwendet sind. Insbesondere ist an die Verwendung eines Viergelenk-Koppelgetriebes gedacht.

Auftretende Abnutzungskräfte können dadurch reduziert werden, daß zur Positionierung der Halteelemente zwei Traghebel sowie ein die Traghebel drehbeweglich koppelnder Querhebel verwendet sind.

Zur Errmöglichung der vorgesehenen Schwenkbewegungen wird vorgeschlagen, daß jeweils eines der Enden der Traghebel den Halteelementen abgewandt drehbeweglich auf dem Blasrad festgelegt ist.

Eine Öffnungs- und Schließbewegung der Blasstation wird dadurch unterstützt, daß die Formträger relativ zu einem Basisschwenklager verschwenkbar gelagert sind.

Zur Bereitstellung einer möglichst kompakten Ausführungsform ist vorgesehen, daß der Querhebel kürzer als jeder der Traghebel ausgebildet ist.

Eine gleichzeitige Übergabe von mehreren Vorformlingen beziehungsweise die Vorformlinge transportierenden Tragelementen kann dadurch erfolgen, daß eine Verbindungslinie der Halteelemente in einer Eingabe- und Ausgabepositionierung im wesentlichen quer zu einer Mittellinie der Blasstation und in einer Blaspositionierung im wesentlichen mit der Mittellinie zusammenfallend angeordnet ist.

Eine möglichst kompakte Durchführung von Übergabevorgängen wird dadurch unterstützt, daß die Halteelemente in der Eingabe- und Ausgabepositionierung mit einem Eingabeabstand relativ zueinander enger als mit einem Blasabstand in der Blaspositionierung angeordnet sind.

Ein einfacher konstruktiver Aufbau wird auch dadurch unterstützt, daß die Halteelemente starr mit jeweils einem der Traghebel verbunden sind.

Eine weitere Unterstützung einer kompakten Konstruktion erfolgt dadurch, daß ein Bewegungsbereich der Halteelemente zwischen dem Basisschwenkgelenk und einer dem Basisschwenkgelenk abgewandten Begrenzung der Formträger lokalisiert ist.

Eine hohe Standfestigkeit durch Vermeidung von hohen Materialbelastungen kann dadurch erreicht werden, daß die Abstandsveränderung von einer Drehbewegung der die Vorformlinge tragenden Schwenkhebel abgeleitet wird.

Bei einer Verwendung von rotierenden Blasrädern erweist es sich insbesondere als zweckmäßig, daß die Abstandsveränderung kurvengesteuert durchgeführt wird.

Eine Verwendung einer möglichst geringen Anzahl an funktionellen Bauelementen wird dadurch unterstützt, daß die Vorformlinge nach einem Einnehmen der Blaspositionierung und einem Schließen der Blasstation gleichzeitig gereckt werden.

In der Zeichnung sind Ausführungsbeispiele der Erfindung schematisch dargestellt. Es zeigen:
- Fig. 1:: Eine Übersichtsdarstellung einer Vorrichtung zur Blasformung von Behältern, die eine Heizeinrichtung, ein mit Blasstationen versehenes rotierendes Blasrad sowie diverse Übergabeeinrichtungen aufweist,
- Fig. 2:: eine perspektivische Darstellung von Antriebselementen für ein Recksystem,
- Fig. 3:: einen Querschnitt durch eine Blasstation mit dargestelltem Vorformling, teilweise expandiertem Behälter mit eingefahrener Reckstange sowie fertig geblasenem Behälter,
- Fig. 4:: einen schematischen Horizontalschnitt durch eine Blasstation mit Positionierelement in der Eingabepositionierung,
- Fig. 5:: die Blasstation gemäß Fig. 4 nach einer teilweisen Durchführung einer Transportbewegung des Positionierelementes von der Eingabepositionierung in die Blaspositionierung,
- Fig. 6:: die Blasstation gemäß Fig. 5 nach einer Fortsetzung der Positionierbewegung,
- Fig. 7:: die Blasstation gemäß Fig. 6 kurz vor einem Erreichen der Blaspositionierung,
- Fig. 8:: die Vorrichtung gemäß Fig. 7, nach dem das Positionierelement die Blaspositionierung erreicht hat, jedoch vor einem Schließen der Blasformen,
- Fig. 9:: einen schematischen Horizontalschnitt durch die Blasstation in der Eingabe- beziehungsweise Ausgabepositionierung des Positionierelementes
und
- Fig. 10:: die Blasstation gemäß Fig. 9, bei der das Positionierelement in die Blaspositionierung verschwenkt ist.

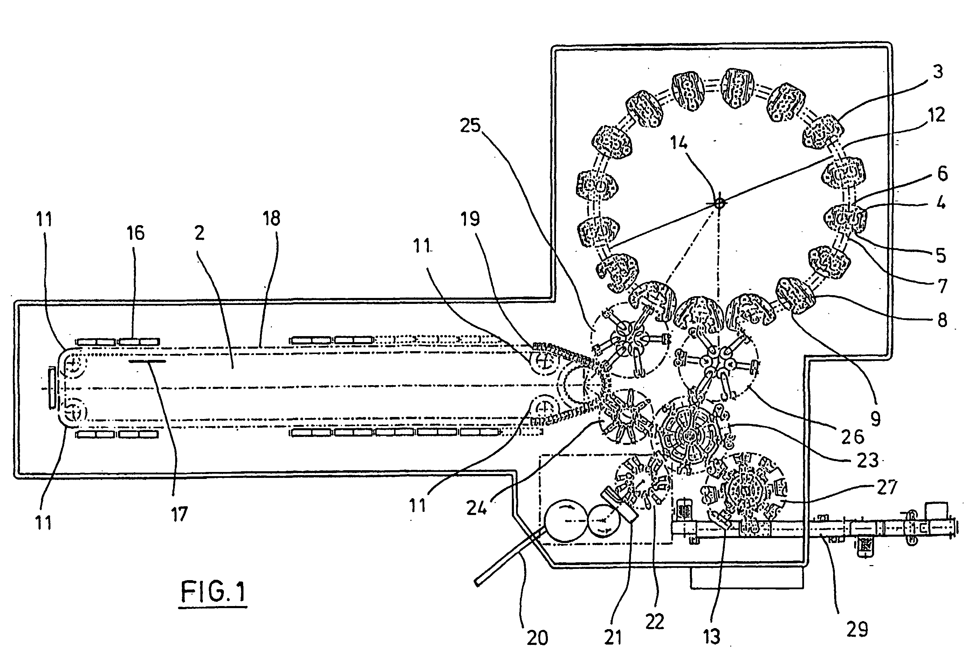

Fig. 1 zeigt den grundsätzlichen Aufbau einer Blasmaschine, die mit einem rotierenden Blasrad (12) sowie einer Heizeinrichtung (2) für zu temperierende Vorformlinge (1) ausgestattet ist. Entlang eines Umfanges des Blasrades (12) sind Blasstationen (3) angeordnet, die jeweils Formträger (4, 5) aufweisen. Die Formträger (4, 5) sind von Tragarmen (6, 7) gehaltert und dienen zur Positionierung von Formelementen, typischerweise von Formhälften (8, 9).

Die Tragarme (6, 7) sind relativ zu einem Basisschwenklager (10) drehbeweglich gelagert. Das Blasrad (12) rotiert relativ zu einer Blasradachse (14) und das Basisschwenklager (10) ist in radialer Richtung der Blasradachse (14) zugewandt angeordnet.

Bei der in Fig. 1 dargestellten Ausführungsform ist die Heizeinrichtung (2) mit einer Transportkette (18) versehen, die die zu erwärmenden Vorformlinge (1) entlang von Heizelementen (16) transportiert. Die Heizelemente (16) können beispielsweise als IR-Strahler ausgebildet sein. Es ist aber ebenfalls möglich, in anderen Frequenzbereichen operierende Strahler oder eine Konvektionsheizung vorzusehen. Bei der dargestellten Ausführungsform sind entlang des Transportweges der Vorformlinge (1) die Heizelemente (16) einseitig angeordnet und den Heizelementen (16) gegenüberliegend sind Reflektoren (17) vorgesehen. Grundsätzlich ist auch eine beidseitige Anordnung von Heizelementen (16) realisierbar.

Im Bereich der Transportkette (18) sind die Vorformlinge (1) von Tragelementen (19) gehaltert. Die Tragelemente (19) können beispielsweise als Transportdorne ausgebildet sein, auf die die Vorformlinge (1) aufgesteckt werden. Ebenfalls ist es denkbar, eine Halterung der Vorformlinge (1) über Zangen oder Spreizdorne vorzusehen. Eine weitere Variante besteht darin, im Bereich der Heizeinrichtung umlaufende Tragelemente (19) zu verwenden, die separate Transportdorne haltern.

Insbesondere ist daran gedacht, die Transportkette (18) aus kettenartig miteinander verbundenen Halterungselementen auszubilden, die jeweils die separaten Tragelemente (19) für die Vorformlinge (1) haltern. Eine Führung der Transportkette (18) erfolgt mit Hilfe von Umlenkrädern (11).

Eine Eingabe der Vorformlinge (1) kann derart erfolgen, daß die Vorformlinge (1) zunächst entlang einer Transportschiene (20), in deren Bereich die Vorformlinge (1) mit ihren Mündungen nach oben angeordnet sind, einer Wendeeinrichtung (21) zugeführt werden, die die Vorformlinge (1) mit ihren Mündungen nach unten dreht und zu einem Eingaberad (22) übergibt. Das Eingaberad (22) ist durch Übergaberäder (23, 24) mit der Heizeinrichtung (2) gekoppelt. Insbesondere ist daran gedacht, die Vorformlinge (1) bereits im Bereich des dem Eingaberad (22) zugewandten Übergaberades (23) auf die Tragelemente (19) aufzusetzen.

Die Heizeinrichtung (2) ist von einem Übergaberad (25) mit dem Blasrad (12) gekoppelt und im Bereich der Blasstationen (3) fertiggeblasene Behälter (13) werden vom Blasrad (12) zu einem Entnahmerad (26) übergeben. Das Entnahmerad (26) ist über das Übergaberad (23) mit einem Ausgaberad (27) gekoppelt, das die geblasenen Behälter (13) in den Bereich einer Ausgabestrecke (29) überführt. Im Bereich des Ausgaberades (27) kann eine zweckmäßige Änderung der räumlichen Orientierung der geblasenen Behälter (13) durchgeführt werden.

Zur Ermöglichung einer hohen Wärmeeinbringung in die Vorformlinge (1) ohne Gefahr einer Überhitzung der äußeren Oberfläche ist es möglich, im Bereich der Heizeinrichtung (2) zusätzlich zu den Heizelementen (16) Gebläse anzuordnen, die Kühlluft in den Bereich der Vorformlinge (1) leiten. Beispielsweise ist es möglich, in Transportrichtung der Vorformlinge (1) abwechselnd Heizelemente (16) und Gebläse nacheinander zu positionieren.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

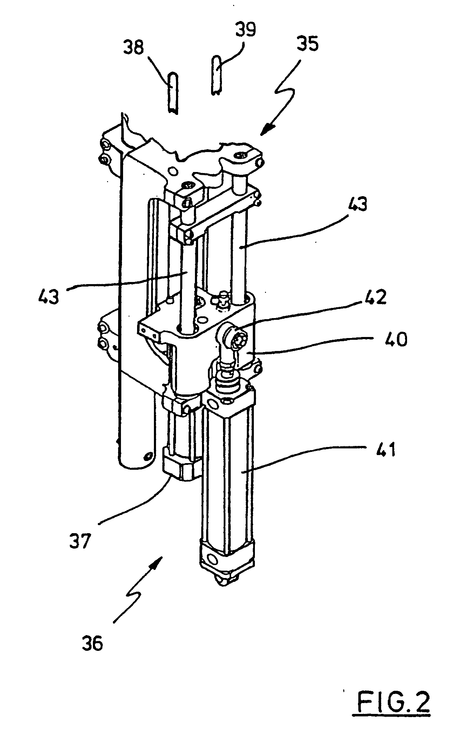

Fig. 2 zeigt eine mögliche Realisierung für eine Reckeinrichtung (35), die dafür vorgesehen ist, Reckstangen (38, 39) vor einem Aufblasen der Vorformlinge (1) zur Durchführung einer Längsreckung in die Vorformlinge (1) einzuführen. Insbesondere ist es möglich, mit Hilfe der Reckeinrichtung (35) zwei oder mehr Reckstangen (38, 39) gleichzeitig in die jeweils zugeordneten Vorformlinge (1) der betreffenden Blasstation (3) einzufahren.

Bei der in Fig. 2 dargestellten Ausführungsform ist das Recksystem derart ausgebildet, daß eine Tandem-Anordnung von zwei Zylindern (36) bereitgestellt ist. Von einem Primärzylinder (37) werden die Reckstangen (38, 39) zunächst vor Beginn des eigentlichen Reckvorganges bis in den Bereich des Bodens des Vorformlings (1) gefahren. Während des eigentlichen Reckvorganges wird der Primärzylinder (37) mit ausgefahrener Reckstange gemeinsam mit einem den Primärzylinder (37) tragenden Schlitten (40) von einem Sekundärzylinder (41) oder über eine Kurvensteuerung positioniert. Insbesondere ist daran gedacht, statt des Sekundärzylinders (41) eine Kurvensteuerung derart einzusetzen, daß von einer Führungsrolle (42), die während der Durchführung des Reckvorganges an einer Kurvenbahn entlanggleitet, eine aktuelle Reckposition vorgegeben wird. Die Führungsrolle (42) kann auch vom Sekundärzylinder (41) gegen eine Führungsbahn gedrückt werden. Der Schlitten (40) gleitet entlang von zwei Führungselementen (43).

Zur Ermöglichung eines Einsetzens der Vorformlinge (1) in die Blasstation (3) und zur Ermöglichung eines Herausnehmens der fertigen Behälter (13) besteht die Blasform zusätzlich zu den Formhälften (8, 9) aus einem Bodenteil (44), der von einer Hubvorrichtung positionierbar ist. Der Vorformling (1) kann im Bereich der Blasstation (3) von einem Tragelement (19), beispielsweise einem Transportdorn, gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasstation (3) einzusetzen.

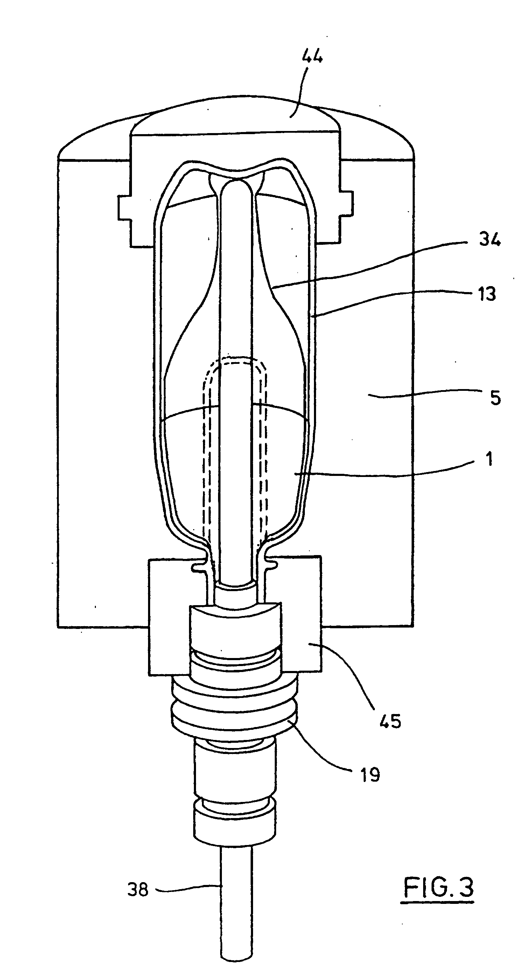

Zur Anpassung an unterschiedliche Formen des Mündungsabschnittes des Vorformlings (1) ist gemäß Fig. 3 die Verwendung separater Gewindeeinsätze (45) im Bereich der Blasform (3) vorgesehen. Zusätzlich zum geblasenen Behälter (13) und dem gestrichelt dargestellten Vorformling (1) ist auch die sich entwickelnde Blase (34) abgebildet.

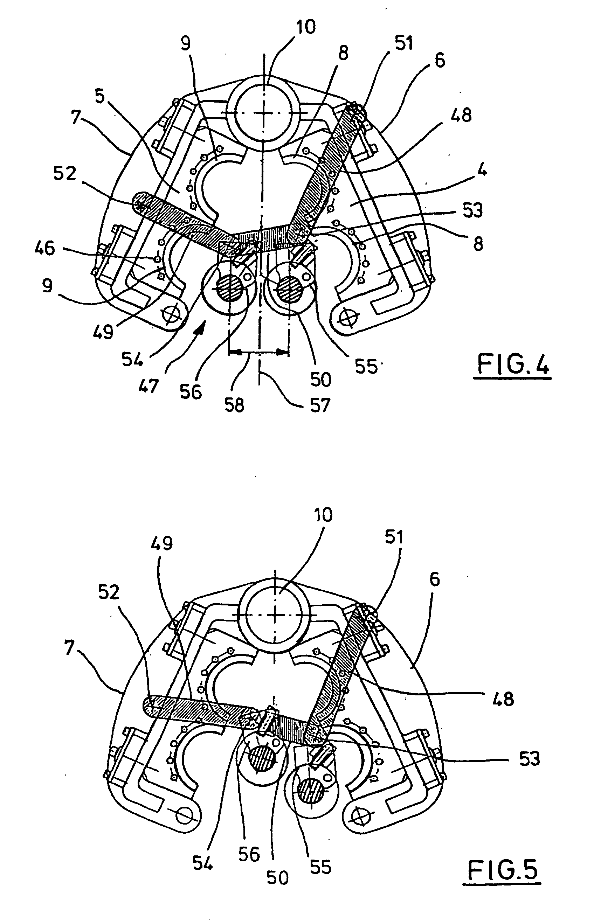

Fig. 4 zeigt einen horizontalen Schnitt durch die Blasstation (3). Es ist insbesondere erkennbar, daß im Bereich jedes Formträgers (4, 5) mehrere Formhälften (8, 9) angeordnet sind. Jeweils ein Paar von Formhälften (8, 9) ist einander gegenüberliegend angeordnet, um eine Kavität auszubilden. Die Anzahl der Werkzeuge je Blasstation (3) entspricht somit der Anzahl der gleichzeitig herzustellenden Behälter (13). Gegenüber der Verwendung eines gemeinsamen Werkzeuges für alle gleichzeitig herzustellenden Behälter (13) weist die dargestellte Ausführungsform den Vorteil einer größeren Modalisierung bei Verwendung einer größeren Anzahl einfach gestalteter Bauelemente auf. Die Herstellungskosten können hierdurch reduziert werden.

Jeweils hinter den Formhälften (8, 9) sind innerhalb der Formträger (4, 5) Temperiermittelkanäle (46) für ein zirkulierendes Temperiermittel abgebildet.

Zur Handhabung der Vorformlinge (1) sowie der geblasenen Behälter (13) innerhalb der Blasstation (3) wird ein Positionierelement (47) verwendet. Das Positionierelement (47) besteht aus zwei Traghebeln (48, 49) sowie einem die Traghebel (48, 49) miteinander verbindenen Querhebel (50). Im Bereich jeweils eines Endes sind die Traghebel (48, 49) über Schwenkgelenke (51, 52) im Bereich der Tragarme (6, 7) angelenkt. über Schwenkgelenke (53, 54), die jeweils im Bereich von Enden der Traghebel (48, 49) angeordnet sind, die den Schwenkgelenken (51, 52) gegenüberliegen, erfolgt eine Verbindung der Traghebel (48, 49) mit dem Querhebel (50).

Im Bereich der den Schwenkgelenken (53, 54) zugewandten Enden der Traghebel (48, 49) ist jeweils ein Halteelement (55, 56) für die Vorformlinge (1) beziehungsweise die geblasenen Behälter (13) angeordnet.

Die Längendimensionierung der Hebel (48, 49, 50) sowie die Positionierung der Schwenkgelenke (51, 52, 53, 54) erfolgt derart, daß bei dem in Fig. 4 dargestellten Betriebszustand eine Anordnung der Halteelemente (55, 56) im wesentlichen quer zu einer Mittellinie (57) der Blasstation (3) erfolgt und daß Mittellinien der Halteelemente (55, 56) relativ zueinander einen Eingabeabstand (58) aufweisen.

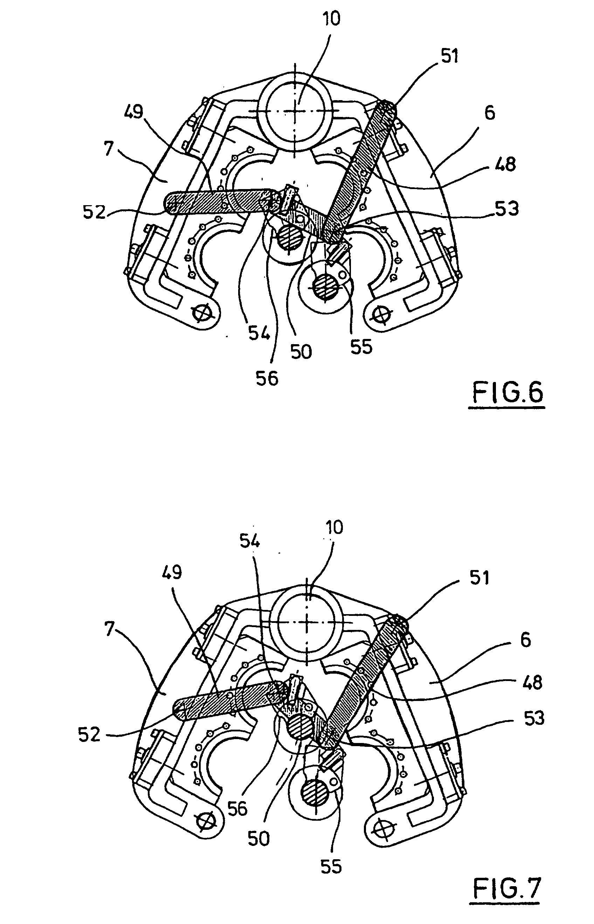

Bei dem in Fig. 5 dargestellten Arbeitsschritt hat das Positionierelement (47) bereits seine Überführungsbewegung durch Verschwenken der einzelnen Bauelemente begonnen. Aufgrund der Kopplung der Traghebel (48, 49) über die Schwenkgelenke (51, 52) mit dem Blasrad (12) verursacht die Bewegung einer zugeordneten Kurvenrolle gleichzeitig eine Bewegung der Hebel (48, 49, 50). Durch diese Bewegung der Hebel (50, 51, 52) erfolgt ein Positionieren der Halteelemente (55, 56) gemeinsam mit gehalterten Vorformlingen in die Blasstation (3) hinein.

Gemäß dem Arbeitsschritt in Fig. 6 ist diese Hineinbewegung der Halteelemente (55, 56) in die Blasstation (3) weiter fortgesetzt. Einen zeitlich noch später liegenden Arbeitsschritt zeigt Fig. 7. Hier ist insbesondere erkennbar, daß sich inzwischen der Abstand der Mittellinien der Halteelemente (55, 56) relativ zueinander vergrößert hat.

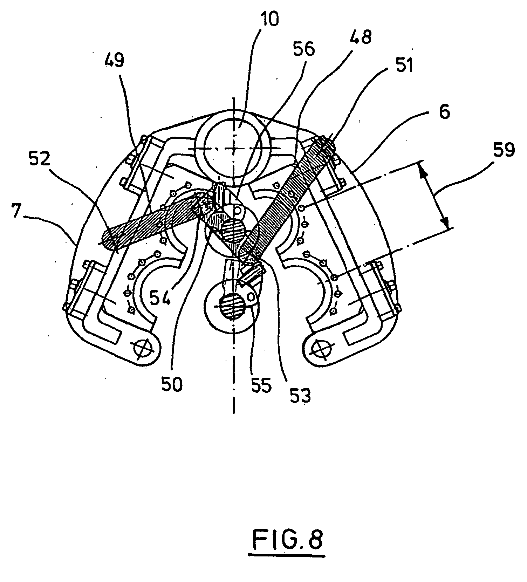

Fig. 8 zeigt den Abschluß der Bewegung des Positionierelementes (47). Eine Verbindungslinie der Mittelachsen der Halteelemente (55, 56) fällt hierbei im wesentlichen mit der Mittellinie (57) der Blasstation (3) zusammen. Ein Mittellinienabstand der Halteelemente (55, 56) hat sich aufgrund der durchgeführten Schwenkbewegung vom ursprünglichen Eingabeabstand (58) auf einen Blasabstand (59) vergrößert. Bei einem Schließen der Blasstation (3) durch eine Schwenkbewegung der Tragarme (6, 7) fallen somit die Mittellinien der Halteelemente (55, 56) beziehungsweise von gehalterten Vorformlingen (1) mit Mittellinien der Kavitäten zusammen, die jeweils von Paaren der Formhälften (8, 9) begrenzt sind.

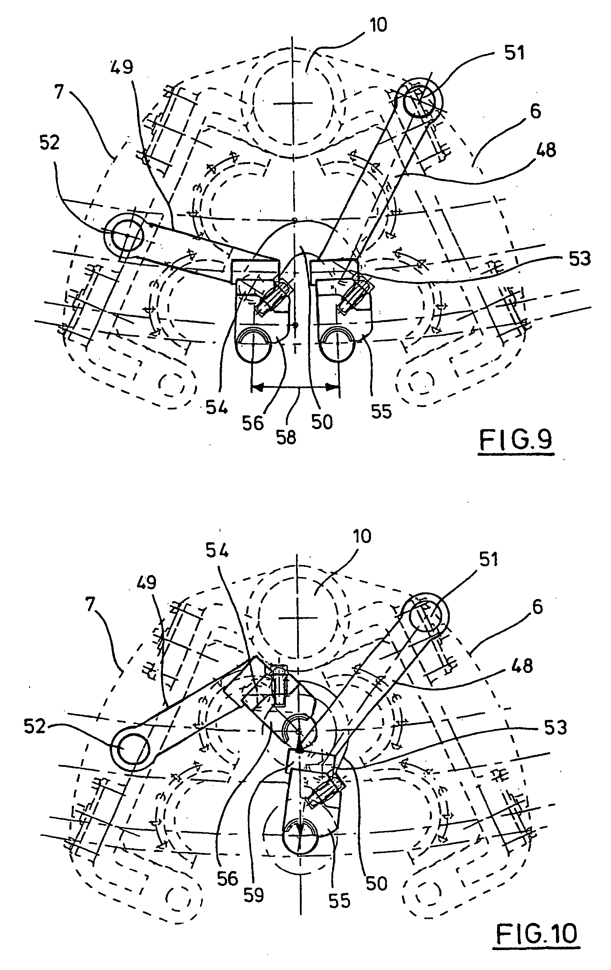

Zur weiteren Verdeutlichung sind in Fig. 9 und Fig. 10 noch einmal die Eingabepositionierung und die Ausgabepositionierung dargestellt. Es sind insbesondere die mit dem Eingabeabstand (58) relativ zueinander angeordneten Halteelemente (55, 56) in Fig. 9 sowie die Halteelemente (55, 56) nach Erreichen des Blasabstandes (59) in Fig. 10 erkennbar.

Durch die vorgeschlagene konstruktive Gestaltung des Positionierelementes (47) ist es insbesondere möglich, bei einer Verwendung von die Vorformlinge (1) beziehungsweise die Behälter (13) halternden Tragelementen (19) eine gleichzeitige Übergabe von mindestens zwei Tragelementen (9, 10) vom Übergaberad (25) an das Positionierelement (47) durchzuführen. Diese gleichzeitige Übergabe ermöglicht es, das Übergaberad (25) mit Übergabearmen auszustatten, die jeweils mindestens zwei Tragelemente (9, 10) haltern. Hierdurch kann die Anzahl der Übergabearme entsprechend reduziert werden, beziehungsweise bei einer Beibehaltung der Anzahl der Übergabearme oder einer nur teilweisen Reduzierung dieser Anzahl kann die Drehzahl des Übergaberades (25) herabgesetzt werden. Eine derartige konstruktive Gestaltung ist insbesondere bei Maschinen mit hoher Produktionsleistung von Bedeutung.

## Patentansprüche

1. Vorrichtung zur Blasformung von Behältern (13) aus einem thermoplastischen Material, die eine Heizeinrichtung (2) zur Temperierung von Vorformlingen (1) und mindestens eine mit relativ zueinander positionierbaren Formträgern (4, 5) versehene Blasstation (3) aufweist und bei der im Bereich der Blasstation (3) mindestens zwei Kavitäten sowie ein als Teil der Blasstation (3) ausgebildetes Positionierelement (47) zur gleichzeitigen Handhabung der vorformlinge (1) angeordnet sind und bei der das Positionierelement (47) mindestens zwei Halteelemente (55, 56) für jeweils einen Vorformling (1) oder einen Behälter (13) aufweist, **dadurch gekennzeichnet, daß** die Halteelemente (55, 56) abstandsvariabel im Bereich des Positionierelementes (47) angeordnet sind und daß eine jeweilige Positionierung der Halteelemente (55, 56) relativ zueinander in Abhängigkeit von einer jeweiligen Anordnung des Positionierelementes (47) relativ zu den Kavitäten vorgegeben ist.

2. Vorrichtung nach Anspruch 1, **dadurch gekennzeichnet, daß** die Positionierung der Halteelemente (55, 56) mechanisch gesteuert ist.

3. Vorrichtung nach Anspruch 1 oder 2, **dadurch gekennzeichnet, daß** die Bewegung der Halteelemente (55, 56) von Schwenkhebeln gesteuert ist.

4. Vorrichtung nach einem der Ansprüche 1 bis 3, **dadurch gekennzeichnet, daß** zur Positionierung der Halteelemente (55, 56) drei Hebel (48, 49, 50) verwendet sind.

5. Vorrichtung nach einem der Ansprüche 1 bis 4, **dadurch gekennzeichnet, daß** zur Positionierung der Halteelemente (55, 56) zwei Traghebel (48, 49) sowie ein die Traghebel (48, 49) drehbeweglich koppelnder Querhebel (50) verwendet sind.

6. Vorrichtung nach einem der Ansprüche 1 bis 5, **dadurch gekennzeichnet, daß** jeweils eines der Enden der Traghebel (48, 49) den Halteelementen (55, 56) abgewandt drehbeweglich auf dem Blasrad (12) festgelegt ist.

7. Vorrichtung nach einem der Ansprüche 1 bis 6, **dadurch gekennzeichnet, daß** die Formträger (4, 5) relativ zu einem Basisschwenklager (10) verschwenkbar gelagert sind.

8. Vorrichtung nach einem der Ansprüche 1 bis 7, **dadurch gekennzeichnet, daß** der Querhebel (50) kürzer als jeder der Traghebel (48, 49) ausgebildet ist.

9. Vorrichtung nach einem der Ansprüche 1 bis 8, **dadurch gekennzeichnet, daß** eine Verbindungslinie der Halteelemente (55, 56) in einer Eingabe- und Ausgabepositionierung im wesentlichen quer zu einer Mittellinie (57) der Blasstation (3) und in einer Blaspositionierung im wesentlichen mit der Mittellinie (58) zusammenfallend angeordnet ist.

10. Vorrichtung nach einem der Ansprüche 1 bis 9, **dadurch gekennzeichnet, daß** die Halteelemente (55, 56) in der Eingabe- und Ausgabepositionierung mit einem Eingabeabstand (58) relativ zueinander enger als mit einem Blasabstand (59) in der Blaspositionierung angeordnet sind.

11. Vorrichtung nach einem der Ansprüche 1 bis 10, **dadurch gekennzeichnet, daß** die Halteelemente (55, 56) starr mit jeweils einem der Traghebel (58, 59) verbunden sind.

12. Vorrichtung nach einem der Ansprüche 1 bis 11, **dadurch gekennzeichnet, daß** ein Bewegungsbereich der Halteelemente (55, 56) zwischen dem Basisschwenkgelenk (10) und einer dem Basisschwenkgelenk (10) abgewandten Begrenzung der Formträger (4, 5) lokalisiert ist.

13. Verfahren zur Blasformung von Behältern (13) aus einem thermoplastischen Material, bei dem Vorformlinge (1) temperiert und im Bereich mindestens einer Blasstation (3) zu Behältern (13) umgeformt werden und bei dem Formen zur Vorgabe der Behälterkontur von Formträgern (4, 5) gehaltert werden, die von Tragarmen (6, 7) positionierbar sind sowie bei dem innerhalb jeder Blasstation (3) mindestens zwei Vorformlinge gleichzeitig zu Behältern (13) umgeformt und derart positioniert werden, daß die Vorformlinge (1) bei einer Eingabe in die Blasstation (3) eine Positionierung einnehmen, die von der Positionierung während des Blasvorganges abweicht, **dadurch gekennzeichnet, daß** ein Abstand der Vorformlinge (1) relativ zueinander während des Transportes von der Eingabe in die Blasstation (3) bis zur Blaspositionierung von einem als Teil der Blasstation (3) ausgebildeten Element verändert wird und bei dem die Abstandsveränderung von diesem Element zwangssynchronisiert in Abhängigkeit von einer jeweiligen Positionierung entlang des Transportweges von der Eingabe in die Blasstation (3) bis zur Blaspositionierung durchgeführt wird und daß die Vorformlinge (1) nach einem Einnehmen der Blaspositionierung und einem Schließen der Blasstation (3) gleichzeitig gereckt werden.

14. Verfahren nach Anspruch 13, **dadurch gekennzeichnet, daß** die Abstandsveränderung von einer Drehbewegung der die Vorformlinge (1) tragenden Schwenkhebel abgeleitet wird.

15. Verfahren nach Anspruch 13 oder 14, **dadurch gekennzeichnet, daß** die Abstandsveränderung kurvengesteuert durchgeführt wird.

16. Verfahren nach einem der Ansprüche 13 bis 15, **dadurch gekennzeichnet, daß** die Vorformlinge (1) nach einem Einnehmen der Blaspositionierung und einem Schließen der Blasstation (3) gleichzeitig gereckt werden.

## Claims

1. Device for blow-moulding containers (13) from a thermoplastic material, which device has a heating apparatus (2) for tempering parisons (1) and at least one blowing station (3) provided with mould-carriers (4, 5) that can be positioned relative to one another; and in which device there are disposed, in the vicinity of the blowing station (3), at least two cavities and also a positioning element (47), which is constructed as part of the said blowing station (3), for the simultaneous handling of the parisons (1); and in which device the positioning element (47) has at least two holding elements (55, 56) for holding a parison (1) or a container (13) in each case; **characterised in that** the said holding elements (55, 56) are disposed in the vicinity of the positioning element (47) so as to be variable in distance, and that a particular positioning of the holding elements (55, 56) relative to one another is predetermined in dependence upon a particular disposition of the positioning element (47) relative to the cavities.

2. Device according to claim 1, **characterised in that** the positioning of the holding elements (55, 56) is mechanically controlled.

3. Device according to claim 1 to 2, **characterised in that** the movement of the holding elements (55, 56) is controlled by swivelling levers.

4. Device according to one of claims 1 to 3, **characterised in that** three levers (48, 49, 50) are used for positioning the holding elements (55, 56).

5. Device according to one of claims 1 to 4, **characterised in that** two carrying levers (48, 49), and also a transverse lever (50) which couples the said carrying levers (48, 49) in a rotationally movable manner, are used for positioning the holding elements (55, 56).

6. Device according to one of claims 1 to 5, **characterised in that** one of the ends of the carrying levers (48, 49) is secured, in each case, in a rotationally movable manner on the blowing wheel (12) in a manner averted from the holding elements (55, 56).

7. Device according to one of claims 1 to 6, **characterised in that** the mould-carriers (4, 5) are mounted so as to be swivellable relative to a base-swivelling bearing (10).

8. Device according to one of claims 1 to 7, **characterised in that** the transverse lever (50) is of shorter construction than each of the carrying levers (48, 49).

9. Device according to one of claims 1 to 8, **characterised in that** a line connecting the holding elements (55, 56) is disposed, in an input and output positioning, in a manner essentially transverse to a central line (57) of the blowing station (3) and, in a blowing positioning, in a manner essentially coinciding with the central line (58).

10. Device according to one of claims 1 to 9, **characterised in that**, in the input and output positioning, the holding elements (55, 56) are disposed, by means of an input distance (58) relative to one another, more closely than by means of a blowing distance (59) in the blowing positioning.

11. Device according to one of claims 1 to 10, **characterised in that** the holding elements (55, 56) are rigidly connected to one of the carrying levers (58, 59) in each case.

12. Device according to one of claims 1 to 11, **characterised in that** one range of movement of the holding elements (55, 56) is located between the base-swivelling joint (10) and a boundary of the mould-carriers (4, 5) which is averted from the said base-swivelling joint (10).

13. Process for blow-moulding containers (13) from a thermoplastic material, in which process parisons (1) are tempered and are reshaped in the vicinity of at least one blowing station (3) to form containers (13); and in which process moulds for predetermining the container contour are held by mould-carriers (4, 5) which can be positioned by carrying arms (6, 7); and in which process, within each blowing station (3), at least two parisons are simultaneously reshaped to form containers (13) and positioned in such a way that the said parisons (1) assume, on input into the blowing station (3), positioning which deviates from the positioning during the blowing operation; **characterised in that** a distance of the parisons (1) relative to one another is changed, during transport from the input into the blowing station (3) as far as the blowing positioning, by an element constructed as part of the said blowing station (3); and that the change in distance is carried out by the said element in a positively synchronised manner in dependence upon a particular positioning along the transport path from the input into the blowing station (3) as far as the blowing positioning; and that the parisons (1) are stretched simultaneously after the blowing positioning has been assumed and the blowing station (3) has been closed.

14. Process according to claim 13, **characterised in that** the change in distance is derived from a rotary movement of the swivelling levers carrying the parisons (1).

15. Process according to claim 13 or 14, **characterised in that** the change in distance is carried out in a cam-controlled manner.

16. Process according to one of claims 13 to 15, **characterised in that** the parisons (1) are stretched simultaneously after the blowing positioning has been assumed and the blowing station (3) has been closed.

## Revendications

1. Dispositif pour le moulage par soufflage de récipients (13) en un matériau thermoplastique, présentant un dispositif de chauffage (2) pour tempérer les préformés (1) et au moins une station de soufflage (3) pourvue de supports des moules (4, 5) positionnables l'un par rapport à l'autre, et où sont disposés au niveau de la station de soufflage (3) au moins deux cavités ainsi qu'un élément de positionnement (47) formant une partie de la station de soufflage (3) pour une manipulation simultanée des préformés (1) et où l'élément de positionnement (47) présente au moins deux éléments d'appui (55, 56) pour à chaque fois un préformé (1) ou un récipient (13), **caractérisé en ce que** les éléments d'appui (55, 56) sont arrangés de façon variable en distance au niveau de l'élément de positionnement (47) et chaque positionnement des éléments d'appui (55, 56) l'un par rapport à l'autre en fonction d'une disposition correspondante de l'élément de positionnement (47) par rapport aux cavités est donné.

2. Dispositif selon la revendication 1, **caractérisé en ce que** le positionnement des éléments d'appui (55, 56) est réglé mécaniquement.

3. Dispositif selon la revendication 1 ou 2, **caractérisé en ce que** le mouvement des éléments d'appui (55, 56) est réglé par des leviers orientables.

4. Dispositif selon l'une quelconque des revendications 1 à 3, **caractérisé en ce que** pour le positionnement des éléments d'appui (55, 56), trois leviers (48, 49, 50) sont utilisés.

5. Dispositif selon l'une quelconque des revendications 1 à 4, **caractérisé en ce que** pour le positionnement des éléments d'appui (55, 56), deux leviers de support (48, 49) ainsi qu'un levier transversal (50) couplant d'une façon pivotable les leviers de support (48, 49) sont utilisés.

6. Dispositif selon l'une quelconque des revendications 1 à 5, **caractérisé en ce qu'**une des extrémités des leviers de support (48, 49) est fixée d'une façon pivotable et détournée des éléments d'appui (55, 56) sur la roue de soufflage (12).

7. Dispositif selon l'une quelconque des revendications 1 à 6, **caractérisé en ce que** les supports des moules (4, 5) sont positionnés de façon pivotable par rapport à une position d'orientation de base (10).

8. Dispositif selon l'une quelconque des revendications 1 à 7, **caractérisé en ce que** le levier transversal (50) est plus court que chacun des leviers de support (48, 49).

9. Dispositif selon l'une quelconque des revendications 1 à 8, **caractérisé en ce qu'**une ligne de liaison des éléments d'appui (55, 56) dans un positionnement d'entrée et de sortie est disposée généralement en travers par rapport à la ligne médiane (57) de la station de soufflage (3) et en un positionnement de soufflage, est arrangé en coïncidant essentiellement avec la ligne médiane (58).

10. Dispositif selon l'une quelconque des revendications 1 à 9, **caractérisé en ce que** les éléments d'appui (55, 56) en positionnement d'entrée et de sortie avec un écart d'entrée (58) l'un par rapport à l'autre sont disposés plus près qu'en positionnement de soufflage avec un écart de soufflage (59).

11. Dispositif selon l'une quelconque des revendications 1 à 10, **caractérisé en ce que** les éléments d'appui (55, 56) sont reliés d'une façon rigide avec, chaque fois, un levier porteur (58, 59).

12. Dispositif selon l'une quelconque des revendications 1 à 11, **caractérisé en ce qu'**une zone de mouvement des éléments d'appui (55, 56) est localisée entre la position d'orientation de base (10) et une délimitation détournée de la position d'orientation de base (10) des supports des moules (4, 5).

13. Procédé pour le moulage par soufflage de récipients (13) en un matériau thermoplastique, où les préformés (1) sont tempérés et moulés en récipients (13) au niveau d'au moins une station de soufflage (3), et où des moules pour donner le contour de récipient sont fixés par des supports de moule (4, 5) qui sont positionnables par des bras de support (6, 7) et où dans chaque station de soufflage (3), au moins deux préformés sont moulés en récipients (13) simultanément et positionnés de sorte que les préformés (1), lors de l'entrée dans la station de soufflage (3), prennent un positionnement qui varie du positionnement lors du procédé de soufflage, **caractérisé en ce qu'**un écart des préformés (1) l'un par rapport à l'autre pendant le transport pour l'entrée dans la station de soufflage (3) jusqu'au positionnement de soufflage est changé par un élément faisant partie de la station de soufflage (3), et où le changement d'écart est réalisé par cet élément par une synchronisation de force en fonction du positionnement le long de la voie de transport à partir de l'entrée de la station de soufflage (3) jusqu'au positionnement de soufflage et **en ce que** les préformés (1) sont étirés simultanément après la prise de positionnement de soufflage et une fermeture de la station de soufflage (3).

14. Procédé selon la revendication 13, **caractérisé en ce que** le changement d'écart découle d'un mouvement pivotant du levier orientable portant les préformés (1).

15. Procédé selon la revendication 13 ou 14, **caractérisé en ce que** le changement d'écart est réalisé par un réglage courbe.

16. Procédé selon les revendications 13 à 15, **caractérisé en ce que** les préformés (1) sont étirés simultanément après la prise de positionnement de soufflage et une fermeture de la station de soufflage (3).
